Europäisches Patentamt

European Patent Office

Office européen des brevets

(11) Publication number: **0 114 709**
A1

# (12) EUROPEAN PATENT APPLICATION

(21) Application number: **84200053.1**

(22) Date of filing: **17.01.84**

(51) Int. Cl.³: **B 60 P 3/24**

(30) Priority: **25.01.83 SE 8300363**

(43) Date of publication of application:
**01.08.84 Bulletin 84/31**

(84) Designated Contracting States:
**BE CH DE FR GB IT LI**

(71) Applicant: **DYNATRANS AB**
**Datavägen 43**
**S-436 00 Askim(SE)**

(72) Inventor: **Bjurling, Anders**
**Bruksgatan 27**
**S-730 50 Skultuna(SE)**

(74) Representative: **Petri, Stellan**
**c/o SAB NIFE AB Box 515**
**S-261 24 Landskrona(SE)**

(54) A tanker vehicle intended for road transport.

(57) A tanker vehicle, in particular a tanker semi-trailer, intended for road transport.

In order to provide a light cheap, reliable and versatile design, the vehicle consists of a self-supporting outer tank (5), to which wheelsets (2), supporting legs (3) and the king pin (4) are directly attached, and one or more inner tanks (6), which are held in place by being enclosed within the outer tank under a certain degree of pre-tension. The attachment of the wheelsets etc. to the outer tank is by means of tangential, resilient plates.

Fig 7

EP 0 114 709 A1

Croydon Printing Company Ltd.

# A TANKER VEHICLE INTENDED FOR ROAD TRANSPORT

## Technical Field

The present invention relates to a tanker vehicle intended for road transport.

## Prior Art

Various authorities and classification societies stipulate for certain dangerous liquids different wall thicknesses in the tank or tanks in the tanker vehicle. Different methods and different assumptions are used in order to arrive at a minimum wall thickness in relation to, amongst other things, the dangerousness of the load.

The wall thickness may be high, as a consequence of which the tanker vehicle, referred to frequently in the following as the tanker semi-trailer without in any way wishing to restrict the scope of the definition, is often of self-supporting design, with the result that the wheelsets, the supporting leg and the king pin etc. are attached in some way or other directly to the outer skin of the tank. If necessary, insulating material may be arranged on the outside of the tank.

The authorities may, as an alternative, permit a lower tank wall thickness, although in this case the tank must be protected by some sort of frame and/or hard insulation. Most often the result is that the tank is supported by a rigid lower frame, to which the wheelsets, the supporting legs and the king pin etc. are attached.

In the event of a road traffic accident involving a self-supporting tank, the wheelsets may for instance be torn away with the highly likely result that the tank will begin to leak. Practically the same circumstances apply to a tank constructed around a frame, since the tank must be rigidly attached to the frame if it is not to get loose as a result of the often very high stresses.

Thus, tanker vehicles of the conventional types may be heavy and/or expensive, resulting in less satisfactory operating costs and, in spite of every precaution, reduced saftey in certain cases. Furthermore, additional problems may be encountered in conjunction with the transport of certain liquids which call for the use of special equipment.

## The Invention

The problems associated with existing designs will be overcome, and a comparatively light and cheap design with major advantages will be achieved, if the tanker vehicle in accordance with the invention consists of a self-supporting outer tank, to which wheelsets, supporting legs, a king pin etc. are directly attached, and one or more load-bearing inner tanks arranged inside the outer tank, the outer tank holding the inner tanks in place by enclosing them under a certain degree of pre-tension.

The fundamental idea behind this design is that the outer tank shall support the majority of the external loads and that it shall therefore be capable of being produced from a material suitable for that purpose alone, whereas the inner tanks shall only be load-bearing and may thus be produced from any material suitable for the purpose.

This may be achieved in accordance with the invention by causing the wheelsets, the supporting legs and the king pin etc. to be attached to the outer tank by means of resilient plates which are attached to the tank essentially only tangentially and are only capable of transferring membrane stresses to the tank.

## Brief Description of the Drawings

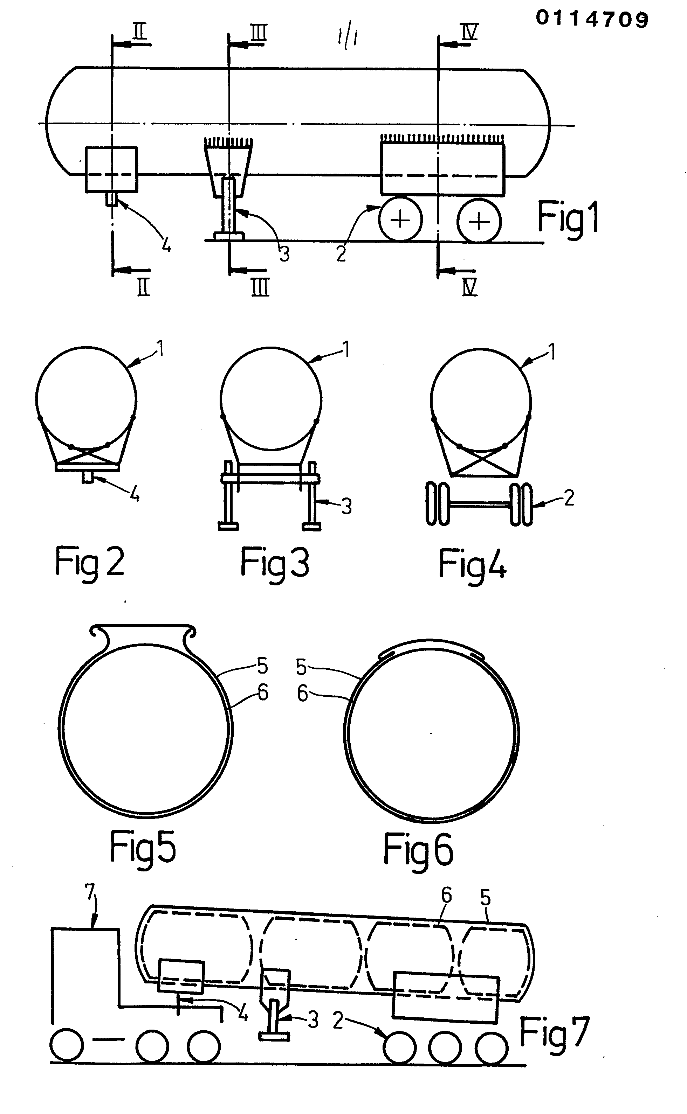

The invention is described below in greater detail with reference to the accompanying drawing, in which Fig. 1 is a diagrammatic side view of a tanker semi-trailer in accordance with the invention, Figs. 2, 3 and 4 are diagrammatic section views along the lines II-II, III-III and IV-IV, respectively in Fig. 1, Figs. 5 and 6 are diagrammatic section views showing the manner in which an inner tank and an outer tank in accordance with the invention are brought together, and Fig. 7 is a diagrammatic side view of a tanker vehicle in accordance with the invention.

## Description of Preferred Embodiments

A semi-trailer represented diagrammatically in Fig. 1 consists of the main components tank 1, wheelset 2, supporting leg 3 and king pin 4 enabling the semi-trailer to be coupled to a tractor vehicle (not shown in Fig.1 but in Fig. 7).

As described in greater detail below, and as can be appreciated from Figs. 5 and 6, the tank 1 consists of one outer tank 5 and at least one inner tank 6.

The outer tank 5 is basically a relatively rigid, self-supporting shell intended to receive external loadings in the form of the forces exerted by the wheelsets 2, the supporting legs 3 and the king pin 4, and to provide protection for the inner tank or tanks 6, for example in the event of overturning and rolling over.

The inner tanks 6 may be produced from a material suitable for the characteristics of the load.

In order to permit the outer tank 5 to be made as thin as possible within the context of the above requirement for external loadings to be received, no outer forces should be allowed to be applied to the tank at any angle to its surface, but instead all forces shall be as tangential as possible. This may be achieved by the use of the plate arrangements shown in Figs. 2-4 for the wheelsets 2, the supporting legs 3 and the king pin 4. The essentially vertical plates may be regarded as transmitting the forces in a vertical sense, and the horizontal plates may thus be regarded as transmitting the forces in a horizontal sense.

Because the plates bear against the tank in its plane, no moments will occur at the surface of the tank, but only membrance stresses in a single plane. These stresses are always less than the stresses due to moments and stresses in three directions (complete three-dimensional loading).

The outer tank 5 may be executed in the form of a jacket, for example having its upper edge open (Fig. 5) and with separate end panels.

The number of inner tanks 6 may be selected as required, depending on the field of use, and different tanks may be manufactured from different materials, for instance lead-lined steel or aluminium. Material of small thickness may be used, since the inner tanks 6 are will protected. The choice of materials is also facilitated by the fact that they do not require to be attached to each other or to the outer tank 5.

It may be advisable in certain cases to reinforce the inner tanks 6 with supporting rings, and insulation of a soft or firmer type may, if necessary, be arranged on the outside of the inner tanks 6; in the latter case some or all of the supporting rings may be omitted.

The inner tanks 6 are slid into the open outer tank 5, which is clamped around the inner tanks in the manner indicated in Figs. 5 and 6 or by the use of clamping devices. Finally, the outer tank is fitted with its end panels and accessories and inspection hatches, etc.

Fig. 7 shows how a number of inner tanks 6 indicated by broken lines are arranged inside an outer tank 5 so as to form a tanker semi-trailer for coupling to a tractor vehicle 7.

The tare weight of a tank executed in accordance with the invention will often be lower than that of conventional, self-supporting tanks, due to the fact that the inner tanks can be made thinner and do not need to withstand external stresses and that the outer tank, which is independent of the load being transported, can be made from a light material, for example aluminium. The tare weight is thus always lower than that of tanks constructed around a frame.

Freedom of choice is provided with regard to load combinations, for example a dangerous load may be transported in one direction using inner tanks of the correct type and a harmless load in the other direction with the dangerous load tanks empty. Since these latter tanks always have internal sealing devices in their bottom valves, parts of the outer tank bearing the wheelsets, the supporting legs and the king pin may be torn away without necessarily causing the dangerous load to leak in the event of a road traffic accident, since the outer tank and the inner tank are independent of each other.

The fatigue cracks which are relatively common in tanker vehicles should, if they are present at all, only occur in the outer tank and should not, therefore, give rise to poisoning, corrosion damage or the risk of fire, etc.

----------

CLAIMS

1. A tanker vehicle for road transport, **characterized** in that it consists of a self-supporting outer tank (5), to which wheelsets (2), supporting legs (3), a king pin (4) etc. are directly attached, and one or more load-bearing inner tanks (6) arranged inside the outer tank, and in that the outer tank holds the inner tanks in place by enclosing them under a certain degree of pre-tension.

2. A tanker vehicle according to claim 1, **characterized** in that the attachment of the wheelsets (2), the supporting legs (3) and the king pin (4) etc. to the outer tank (5) is by means of resilient plates which are attached to the tank essentially only tangentially and are only capable of transferring membrane stresses to the tank.

0114709

Fig1

Fig 2

Fig 3

Fig 4

Fig 5

Fig 6

Fig 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A- 266 216 (HUGH) <br> * Claim 1; page 2, lines 52-57; figures 1,2 * | 1 | B 60 P 3/24 |
| A | US-A-2 567 164 (BREHANY et al.) <br> * Figures 7,11 * | 1,2 | |
| A | GB-A-1 058 206 (SEINE MARITIME) <br> * Claim 1; figures 1-10 * | 1,2 | |
| A | FR-A-2 321 435 (ADAMS) <br> * Page 1, line 37 - page 2, line 11; figure 1 * | 1 | |

TECHNICAL FIELDS SEARCHED (Int. Cl. ³)

B 60 P 3/00

The present search report has been drawn up for all claims

| Place of search | Date of completion of the search | Examiner |
|---|---|---|
| THE HAGUE | 18-04-1984 | OSBORNE J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82